# EUROPÄISCHE PATENTSCHRIFT

(11) **EP 0 995 081 B1**
(45) Veröffentlichungstag und Bekanntmachung des Hinweises auf die Patenterteilung: **19.02.2003**
(21) Anmeldenummer: 98932177.3
(22) Anmeldetag: 19.06.1998
(51) Int. Cl.: G01D 5/48, G01B 7/00

(54) **VERFAHREN UND ANORDNUNG ZUR ÜBERTRAGUNG VON NUTZSIGNALEN BEI MAGNETOSTRIKTIVEN POSITIONSSENSOREN**
METHOD AND DEVICE FOR TRANSMITTING USEFUL SIGNALS OF MAGNETOSTRICTIVE POSITION SENSORS
PROCEDE ET DISPOSITIF POUR TRANSMETTRE DES SIGNAUX UTILES DE DETECTEURS DE POSITION MAGNETOSTRICTIFS

(30) Priorität: 08.07.1997 DE 19729169
(43) Veröffentlichungstag der Anmeldung: 26.04.2000
(73) Patentinhaber: ASM AUTOMATION, SENSORIK, MESSTECHNIK GMBH, D-82008 Unterhaching (DE)
(72) Erfinder: STEINICH, Klaus-Manfred, D-85604 Poering (DE)
(74) Vertreter: Alber, Norbert, Dipl.-Ing.
(86) Internationale Anmeldenummer: EP9803762
(87) Internationale Veröffentlichungsnummer: WO99002944

(56) Entgegenhaltungen:
- EP-A- 0 153 437
- WO-A-92/15844
- WO-A-97/23765
- DE-A- 3 131 455

## Beschreibung

### I. Anwendungsgebiet

Die Erfindung betrifft die elektrische Beschaltung von magnetostriktiven Positionssensoren und insbesondere eine Elektronik zur Erzeugung elektrischer Stromimpulse in einem Ultraschall-Erregerstromkreis eines magnetostriktiven Positionssensors und zur Auswertung der auf einem magnetostriktiven Wellenleiter laufenden Ultraschallimpulse, um dadurch die relative Position einer Positionsmarkierung (Magneten) zu bestimmen, welche auf dem magnetostriktiven Wellenleiter verschiebbar ist.

### II. Technischer Hintergrund

Elektrische Impulse werden benötigt, um verschiedenste elektrische Geräte und Vorrichtungen zu betreiben. Ein solches Gerät ist ein Ultraschall-Positionssensor, bei dem ein elektrischer Stromimpuls durch einen elektrischen Leiter geschickt wird, welcher von einem magnetostriktiven Wellenleiter. wie z.B. einem magnetostriktiven Rohr umgeben ist. Ein externer Magnet dient als Positionsmarkierung, die entlang des magnetostriktiven Wellenleiters verschiebbar ist und ein stationäres magnetisches Feld erzeugt, welches mit dem zirkularen magnetischen Feld des Stromimpulses in Wechselwirkung tritt, der durch den Erregerkreis (elektrischen Leiter) geschickt wird. Diese Wechselwirkung ruft einen Ultraschallimpuls im Wellenleiter hervor, der sich entlang des Wellenleiters ausbreitet. Dieser Ultraschallimpuls wird an einer Referenzposition, üblicherweise dem Ende des magnetostriktiven Wellenleiters von einem Detektor erfaßt. Die Zeitdauer zwischen der Auslösung des Erreger-Stromimpulses und dem Empfang des Ultraschallimpulses ist ein Maß für den Abstand des verschiebbaren Positionsmagneten vom Detektor.

Zur elektrischen Steuerung eines solchen Ultraschall-Positionssensors und zur Auswertung und Verarbeitung der am magnetostriktiven Wellenleiter entlanglaufenden Ultraschallwellen sind folgende Schaltkreise zu unterscheiden:
- ein Steuerschaltkreis zur Erzeugung eines elektrischen Steuerimpulses, mit dem ein Impulsgenerator gesteuert wird,
- ein Impulsgenerator zur Erzeugung eines elektrischen Stromimpulses im Ultraschall-Erregerkreises des Ultraschall-Positionssensors.
- ein Ultraschallimpulsdetektor zur Erzeugung eines elektrischen Antwortsignals aus dem Ultraschallimpuls, welcher durch den Erregerimpuls hervorgerufen wurde, und
- eine Auswerteschaltung zur Auswertung und Weiterverarbeitung des elektrischen Antwortsignals, mit der die relative Position eines verschiebbaren Positionsmagneten ermittelt werden kann.

Die oben genannten Funktionsschaltkreise sind in der Regel an ein Versorgungspotential angeschlossen. Darüber hinaus ist es bekannt, über separate Leitungen regelmäßige Steuerimpulse vom Steuerschaltkreis zum Impulsgenerator und über einen weiteren Leiter die elektrischen Antwortsignale an die Auswerteschaltung zu übertragen. Einschließlich der jeweiligen Rückleiter werden für die Steuer- und Antwortsignale (Nutzsignale) und die Versorgungsspannung also bis zu sechs Leitungen benötigt. Die genannten Leitungen sind in der Regel in einem Kabel zusammengefaßt, welches das Gehäuse des Ultraschall-Positionssensors durch eine Öffnung verläßt. Aufgrund der Dicke des Kabels muß die entsprechende Öffnung dementsprechend groß sein, was einerseits die Abdichtung gegen schädliche Umwelteinflüsse erschwert und andererseits eine Schwachstelle für die Einhaltung der EMV-Vorschriften (elektromagnetische Verträglichkeit) darstellt.

### III. Darstellung der Erfindung

### a) Technische Aufgabe

Daher ist es die Aufgabe der vorliegenden Erfindung, die einzelnen Funktionsschaltkreise der Elektronik eines magnetostriktiven Sensors über ein im Querschnitt dünneres Kabel zu versorgen und sowohl Steuer- als auch Antwortimpulse (Nutzsignale) über dieses Kabel zu übertragen.

### b) Lösung der Aufgabe

Gelöst wird diese Aufgabe durch die Ausprüche 1, 10. Zweckmäßige Ausgestaltungen der Erfindung ergeben sich aus den Unteransprüchen.

Dadurch, daß auf dem Versorgungspotentialleiter einer zweipoligen Leitung die stationäre Versorgungsspannung mit frequenten Steuer- bzw. Antwortsignalen überlagert wird, ist eine zweipolige Leitung für eine Übertragung der Signale ausreichend. Falls aufgrund der Anordnung der einzelnen Schaltkreise die Signale bidirektional über die zweipolige Leitung übertragen werden müssen, kann die Tatsache ausgenutzt werden, daß zwischen der Erzeugung eines Steuerimpulses und der Übertragung des Antwortsignals in die entgegengesetzte Richtung eine gewisse Zeitspanne, nämlich genau die Laufzeit der Ultraschallwelle auf dem magnetostriktiven Leiter, liegt, wodurch sich die Signale nicht gegenseitig stören können. Die Taktfrequenz des Steuerimpulses ist ausreichend groß zu wählen.

Die erforderlichen Schaltkreise befinden sich teilweise innerhalb und teilweise außerhalb des Gehäuses des Positionssensors. Wenn die Nutzsignale (Steuerimpuls bzw. Antwortsignal) aufgrund der Anordnung der Schaltkreise in das Gehäuse hinein bzw. in Gegenrichtung übertragen werden, erfolgt dies vorzugsweise über eine zweipolige elektrische Leitung, wobei das betreffende Nutzsignal dem Versorgungspotential überlagert ist. Wenigstens die Nutzsignale von und zur Auswerteschaltung werden über die zweipolige Versorgungsleitung übertragen.

Zwischen Schaltkreisen, die sich entweder gemeinsam innerhalb oder außerhalb des Positionssensorgehäuses befinden ist die Auskopplung und Übertragung der Nutzsignale auf dem Versorgungsleiter nicht unbedingt nötig. Falls ein Nutzsignal innerhalb eines der Bereiche (innerhalb oder außerhalb des Gehäuses) zu einem anderen Schaltkreis übertragen werden soll, kann dies auch über eine direkte Leitung geschehen.

Der von der Steuerschaltung erzeugte Steuerimpuls wird vorzugsweise auf dem Versorgungsleiter zur Auswerteschaltung übertragen und zur Initialisierung der Auswerteschaltung verwendet, d.h. es wird z.B. ein Flip-Flop gesetzt und ein Zähler gestartet, wie er z.B. aus der US-A-4,721,902 (Tellerman et al.) bekannt ist. Das nach einer bestimmten Laufzeit der Ultraschallwellen am Ultraschallimpulsdetektor empfangene Signal wird in ein elektrisches Antwortsignal umgewandelt und läuft über den Versorgungspotentialleiter, vorzugsweise eine zweipolige Leitung, wie z.B. eine Koaxialleitung, in entgegengesetzter Richtung wie das Steuersignal zur Auswerteschaltung zurück. Es setzt sich aber auch in Richtung des Impulsgenerators auf der Versorgungsleitung fort.

Um zu verhindern, daß das Antwortsignal nochmals einen Stromimpuls im Ultraschall-Erregerstromkreis auslöst, wird es im Ultraschallimpulsdetektor relativ schwach verstärkt und weist eine wesentlich kleinere Amplitude auf als das Steuersignal. Dadurch wird die Schaltschwelle eines Schalters im Ultraschall-Erregerkreis nicht überschritten.

Die einzelnen Schaltkreise der Elektronik eines Ultraschall-Positionssensors sind - falls erforderlich - vorzugsweise jeweils an ihren Versorgungsanschlüssen mit dem Versorgungsleiter verbunden und liegen somit am Versorgungspotential. Einund Ausgänge, die zur Übertragung von Nutzsignalen über den Versorgungsleiter dienen, sind durch geeignete Impedanzen, wie z.B. Kapazitäten, vom Versorgunspotential entkoppelt. Die Versorgungsanschlüsse der einzelnen Schaltkreise sind dagegen durch geeignete Filter, wie z.B. Induktivitäten oder LC-Tiefpaßfilter von hochfrequenten Signalen entkoppelt, um eine stabile Stromversorgung zu gewährleisten und um die zu übertragenden Nutzsignale von den niederohmigen Pfaden der Stromversorgung zu entkoppeln.

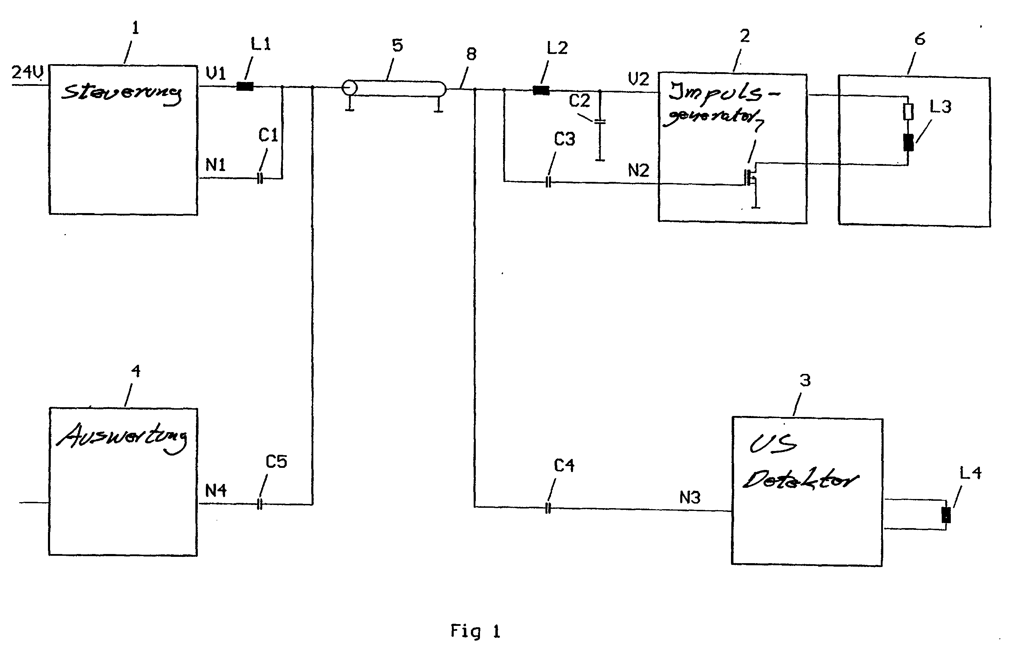

Als Versorgungsleitung wird vorzugsweise eine Koaxialleitung verwendet. Die Anordnung der einzelnen Schaltkreise bezüglich der Koaxialleitung ist änderbar, wobei z.B. der Steuerschaltkreis auch rechts der Koaxialleitung in Fig. 1 angeordnet sein kann. Ebenso kann der Impulsgenerator. ausgenommen der Schalter 7, links der Koaxialleitung 5 angeordnet sein. In diesem Fall würden die rechts der Leitung befindlichen Schaltkreise an der erhöhten Ausgangsspannung eines Hochsetzstellers liegen, der Teil des Impulsgenerators ist. Diese Spannung kann für die auf der rechten Seite in Fig. 1 angeordneten Schaltkreise z.B. durch Spannungsregler auf den gewünschten Wert reguliert werden.

Einer grundsätzlich verschiedene Lösung schlägt eine zweipolige Leitung zur Signalübertragung vor, auf der jedoch keine Gleichspannung als Versorgungsspannung anliegt. Die zur Versorgung der einzelnen Schaltkreise notwendige Energie wird insbesondere allein durch die Energie des Erregerstromimpulses gewährleistet. Mit einem Teil der Energie des Erregerstromimpulses wird ein Ladungsspeicher, vorzugsweise ein Speicherkondensator aufgeladen. Die am Kondensator anliegende Spannung kann anderen Schaltkreisen, wie z. B. dem Impulsdetektor als Versorgungsspannung zugeführt werden.

### c) Ausführungsbeispiele

Die Erfindung wird nachstehend anhand der Figur 1 beispielsweise erläutert. Es zeigt
- Fig. 1:: eine schematisches Schaltbild einer Anordnung zur bidirektionalen Übertragung von Impulsen über eine zweipolige elektrische Leitung;
- Fig. 2:: ein detaillierteres Schaltbild der erfindungsgemäßen Anordnung in Fig. 1; und
- Fig. 3:: ein schematisches Schaltbild einer zweiten Ausführungsform der erfindungsgemäßen Anordnung.

Die erfindungsgemäße Anordnung umfaßt im wesentlichen:
- einen Steuerschaltkreis 1 zur Erzeugung kurzer elektrischer Steuerimpulse für einen Schalter 7;
- einen Impulsgenerator 2 zur Erregung von Stromimpulsen im Ultraschall-Erregerstromkreis 6, mit bekannten Schaltkreisen, wie z.B. einem Impulsregler, Spannungshochsetzer, etc., wobei durch Schließen des Schalters 7 im Ultraschall-Erregerstromkreis 6 des Positionssensors elektrische Impulse ausgelöst werden;
- einen Ultraschallimpulsdetektor 3, der beim Empfang eines Ultraschallimpulses am magnetostriktiven Wellenleiter ein entsprechendes elektrisches Antwortsignal erzeugt; und
- eine Auswerteschaltung 4 zur Bestimmung der relativen Position einer am Wellenleiter verschiebbaren Positionsmarkierung (Magneten), wobei die Laufzeit des Ultraschallimpulses durch den Wellenleiter, beginnend mit dem Erzeugen des Stromimpulses bis zum Empfang durch den Ultraschallimpulsdetektor ein Maß für die zu messende Magnetposition ist.

Die einzelnen Schaltkreise sind teilweise innerhalb des Gehäuses (in Fig. 1 rechts der Koaxialleitung 5) und teilweise außerhalb des Gehäuses (in Fig. 1 links der Koaxialleitung 5) angeordnet. Neben den Versorgungsanschlüssen V1 - V4 weisen die o. g. Schaltkreise 1 bis 4 jeweils wenigstens einen Nutzsignalein- bzw. -ausgang N1 - N4 auf. Diese Ein- bzw. Ausgänge sind über geeignete Impedanzen, wie z.B. die Kapazitäten C1, C3, C4, C5, mit dem Versorgungspotentialleiter 8 verkoppelt. Dadurch wird der Gleichanteil von der jeweiligen Schaltung entkoppelt und lediglich die Nutzsignale, wie z.B. der Steuerimpuls oder das Antwortsignal werden übertragen.

Im Gegensatz dazu sind die Versorgungsanschlüsse V1 - V4 mittels geeigneter Impedanzen, wie z.B. Induktivitäten L1, L2 von hochfrequenten Signalen am Versorgungspotentialleiter 8 entkoppelt, um eine stabile Versorgungsspannung zu gewährleisten und um die zu übertragenden Nutzsignale von den niederohmigen Pfaden der Stromversorgung zu entkoppeln. Diese Entkopplung kann auch über LC-Filter (L2, C2) erfolgen, die als Tiefpaß wirken.

Der Versorgungspotentialleiter 8 ist vorzugsweise der Innenleiter eines Koaxialkabels 5.

### Nachfolgend wird die prinzipielle Funktion der Anordnung beschrieben:

Zunächst erzeugt der Steuerschaltkreis 1 einen Steuerimpuls, der sich über den Potentialleiter ausbreitet und dadurch für andere Schaltkreise, insbesondere für den Schalter 7 und die Auswerteschaltung 4 zur Verfügung steht. Der Schalter 7, der vorzugsweise Teil des Impulsgenerators 2, und insbesondere ein MOS-Transistor ist, wird kurzfristig leitend und löst einen Stromimpuls im Ultraschall-Erregerkreis 6 aus. Gleichzeitig wird der Steuerimpuls verwendet, um die Auswerteschaltung 4 zu initialisieren, d.h. einen Zählvorgang zu starten.

Die Laufzeit des Ultraschallimpulses durch den Wellenleiters, beginnend mit dem Erzeugen des Stromimpulses bis zum Empfang durch den Ultraschallimpulsdetektor 3, ist ein Maß für die zu messende Magnetposition. Der Ultraschallimpulsdetektor 3 wandelt den Ultraschallimpuls in ein elektrisches Signal um, welches wieder auf den Potentialleiter gekoppelt wird und sich dort zu anderen Schaltkreisen 1 bis 4 ausbreiten kann.

Das Antwortsignal erreicht somit auch den Schalter 7 des Impulsgenerators 2, kann diesen jedoch nicht aktivieren, da die Amplitude des Antwortsignals wesentlich geringer ist als die Amplitude des Steuerimpulses. Insbesondere ist die Amplitude des Steuerimpulses wenigstens doppelt so groß wie die Amplitude des Antwortsignals.

Das Antwortsignal erreicht über die Versorgungsleitung 8 ebenfalls die Auswerteschaltung 4 und stoppt dort den Zählvorgang. Wenn die Ausbreitungsgeschwindigkeit der Ultraschallwelle auf dem magnetostriktiven Leiter bekannt ist, kann die genaue Magnetposition berechnet werden.

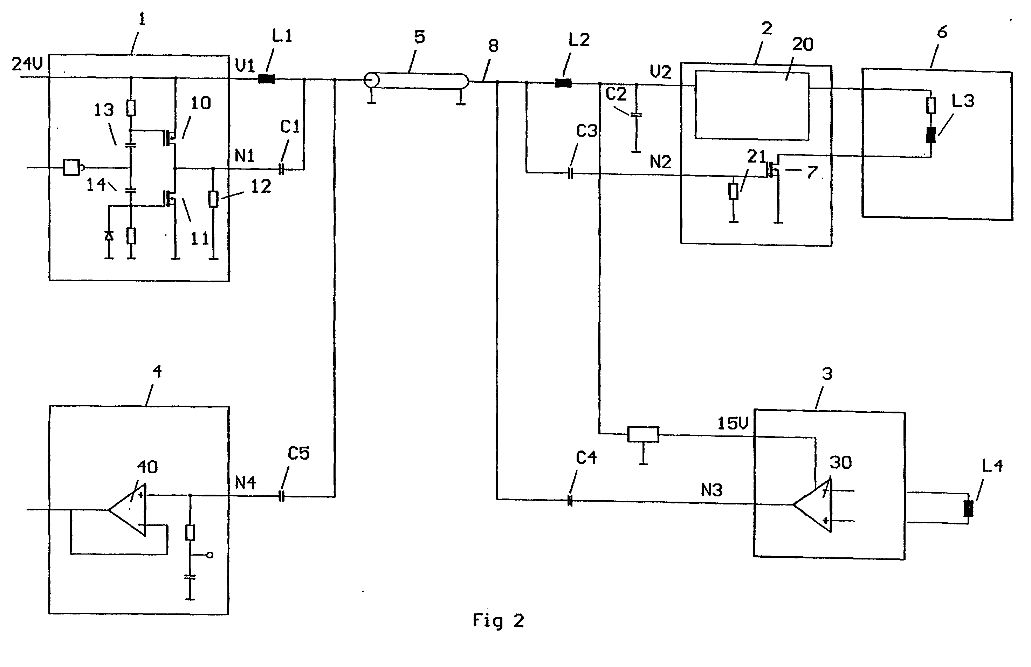

Figur 2 zeigt ein detaillierteres Schaltbild der erfindungsgemäßen Anordnung. Die Steuerschaltung 1 umfaßt zwei Schalter, insbesondere MOS-Transistoren 10, 11 unterschiedlichen Typs, die in Serie geschaltet sind. Wenn der MOS-Transistor 10 leitet, wird das Mittenpotential zwischen den Transistoren 10 und 11 auf Versorgungsspannung V_{DD} angehoben und eine positive Signalflanke erzeugt. Danach wird der MOS-Transistor 10 wieder hochohmig geschaltet und der Transistor 11 leitet. Dadurch wird das Mittenpotential auf Erdpotential abgesenkt und eine fallende Impulsflanke des Steuerimpulses erzeugt.

Darüber hinaus umfaßt der Steuerschaltkreis einen Widerstand 12, der zwischen Mittenpotential und Erde geschaltet ist, zwei Kapazitäten 13 und 14 mit einem gemeinsamen Anschluß und jeweils einer Verbindung zum Gateanschluß eines MOS-Transistors 10, 11. Der Steuersignalausgang ist mit einer Kapazität C3, der Leistungsausgang mit einer Induktivität L1 abgeschlossen.

Der Impulsgenerator 2 umfaßt einen Hochsetzsteller 20, dessen Ausgangsspannung vorzugsweise in einem beliebigen Verhältnis zur Eingangsspannung festgelegt werden kann; und einen N-Kanal MOS-Tansistor 7.

Dem Versorgungsanschluß des Impulsgenerators 2 ist eine Induktivität L2 und eine Kapazität C2 zwischen V2 und Erde vorgeschaltet. Dem Nutzsignaleingang ist eine Kapazität C3 vorgeschaltet. Der Gateanschluß des MOS-Transistors 7 ist mit einem Widerstand 21 und der Kapazität C3 verbunden. Der Ultraschallimpulsdetektor 3 umfaßt eine Detektorspule L4 und einen Impulsverstärker 30 mit einer 15V Spannungsversorgung. Dem Nutzsignalausgang ist eine Kapazität C4 vorgeschaltet, die den Ausgang von der Versorgungsspannung entkoppelt.

Die Kapazitäten C1, C3, C4 und C5 sind jeweils mit dem Potentialleiter verbunden.

Die Auswerteschaltung 4 umfaßt einen weiteren Impulsverstärker 40 und einen Referenz-Spannungsanschluß U_{REF}. Der Ausgang des Impulsverstärkers 40 ist mit einer Auswertelogik (nicht gezeigt) verbunden.

Die Übertragung der Nutzsignale erfolgt bei dieser Ausführungsform über den Potentialleiter, der hier als Koax-Kabelstrecke gebildet ist.

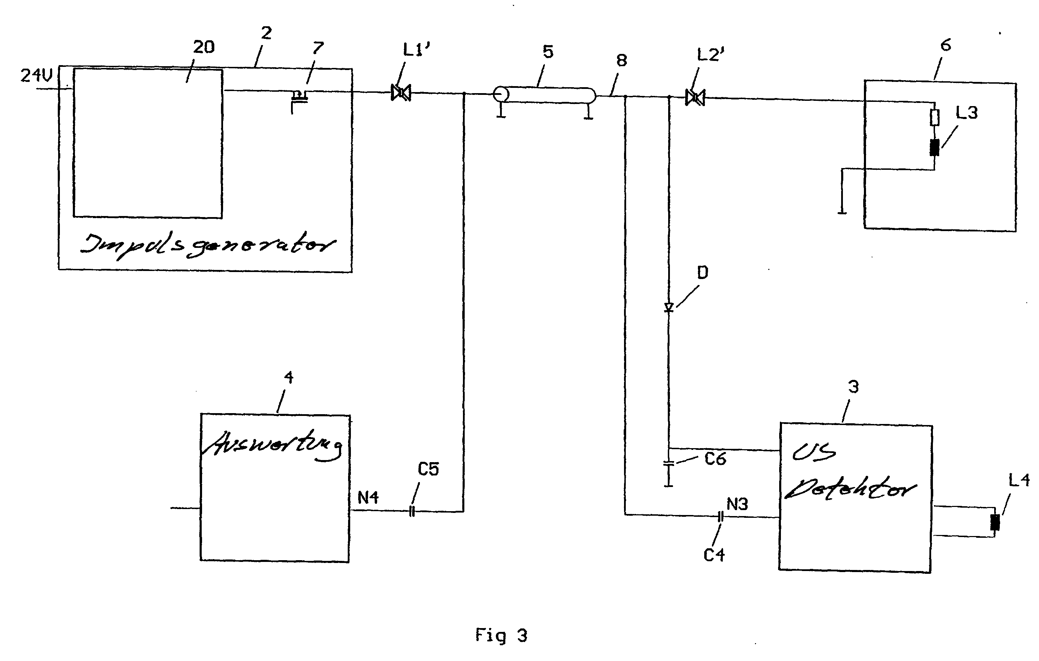

Bei der in Fig. 3 gezeigten Ausführungsform liegt am Leiter 8 keine Versorgungsspannung an. In diesem Fall werden lediglich der Erregerstromimpuls und das Antwortsignal über die zweipolige elektrische Leitung (Koaxleitung 5) übertragen.

Außerhalb des Positionssensorgehäuses (links der Koaxleitung 5) ist ein Impulsgenerator 2, umfassend einen Hochsetzsteller (Spannungshochsetzer), und ein Schalter 7 angeordnet. Die Impedanzen L1, L2 in Fig. 1 sind hier als Schalter ausgeführt. Vorzugsweise sind hier die Impedanzen L1, L2 Triggerdioden L1', L2', die bei Erreichen einer bestimmten Triggerspannung leitend werden und zuvor hochohmig sind, mit einer Triggerspannung zwischen vorzugsweise 20 und 50 Volt. Anstatt der Triggerdioden L1', L2' können z. B. auch Zenerdioden verwendet werden.

Der Erregerimpuls wird bei geschlossenem Schalter 7 über den Leiter 8 in das Gehäuse übertragen und dem Ultraschall-Erregerkreis 6 über die Triggerdiode L2' zugeführt. Gleichzeitig erreicht der Erregerimpuls über eine Diode D einen Speicherkondensator C6. Letzterer wird mit einem Teil der Energie des Erregerimpulses aufgeladen, wodurch sich eine Spannung aufbaut. Diese wird als Versorgungsspannung dem Impulsdetektor 3 zugeführt. Ein Gleichspannungspotential muß daher nicht über den Leiter 8 übertragen werden.

Der Ausgang N3 des Impulsdetektors 3 ist über eine Kapazität C4 mit dem Leiter 8 verkoppelt. Das Antwortsignal wird wie in den Ausführungsformen in Fig. 1, 2 über die Kapazität C4 auf den Leiter 8 ausgekoppelt und über die Koaxialstrecke 5 zur Auswerteschaltung geleitet. Bei dieser Ausführungsform kann die Anzahl der Schaltkreise und damit der Bauelemente innerhalb des Gehäuses stark reduziert werden.

## Patentansprüche

1. Anordnung zur Übertragung von Nutzsignalen auf dem Leiter eines magnetostriktiven Positionssensors, der innerhalb eines Gehäuses angeordnet ist, mit
- einem Impulsgenerator-Schaltkreis (2) zur Erregung von Stromimpulsen im Ultraschall-Erregerstromkreis (6),
- einem Ultraschallimpulsdetektor-Schaltkreis (3), der beim Empfang eines Ultraschallimpulses an einem magnetostriktiven Wellenleiter ein entsprechendes elektrisches Antwortsignal liefert, und
- einem Auswerte-Schaltkreis (4) zur Bestimmung der relativen Position einer am Wellenleiter verschiebbaren Positionsmarkierung,
**dadurch gekennzeichnet, daß**
wenigstens eine Schaltkreis (2 - 4) innerhalb des Gehäuses mit dem Rest außerhalb des Gehäuses über eine zweipolige elektrische Leitung verkoppelt ist, wobei auf der Leitung ein Erregerimpuls oder ein Antwortsignal übertragbar ist.

2. Anordnung nach Anspruch 1,
**dadurch gekennzeichnet, daß**
wenigstens der Erregerstromkreis (6) und der Impulsgenerator (2) von den Antwortsignalen durch Schalter entkoppelt sind.

3. Anordnung nach Anspruch 1,
**dadurch gekennzeichnet, daß**
die Schalter Triggerdioden (L1', L2') oder Zenerdioden sind

4. Anordnung nach Anspruch 1,
**dadurch gekennzeichnet, daß**
der Impulsgenerator außerhalb des Gehäuses angeordnet ist.

5. Anordnung nach Anspruch 1, mit
einem Steuerschaltkreis (1) zur Erzeugung eines elektrischen Steuerimpulses, wobei die oben genannten Schaltkreise (1 - 4) jeweils wenigstens einen Versorgungsanschluß (V1-V4) und einen Nutzsignalein- bzw. -ausgang (N1-N4) aufweisen.

6. Anordnung nach Anspruch 5,
**dadurch gekennzeichnet, daß**
die Nutzsignalein- bzw. -ausgänge (N1-N4), die an den Versorgungspotentialleiter (8) der zweipoligen elektrischen Leitung gekoppelt sind, mittels Impedanzen vom Versorgungspotential entkoppelt sind.

7. Anordnung nach Anspruch 6,
**dadurch gekennzeichnet, daß**
die Impedanzen Kapazitäten (C1, C3, C4, C5) sind.

8. Anordnung nach Anspruch 5,
**dadurch gekennzeichnet, daß**
die Versorgungsanschlüsse (V1-V4) durch Impedanzen von hochfrequenten Nutzsignalen entkoppelt sind, und die Impedanzen insbesondere Induktivitäten bzw. LC-Tiefpaßfilter sind.

9. Anordnung nach Anspruch 5,
**dadurch gekennzeichnet, daß**
der Ultraschallimpulsdetektor (3) einen Impulsverstärker (30) umfaßt.

10. Verfahren zur Übertragung von Nutzsignalen eines magnetostriktiven Positionssensors, der innerhalb eines Gehäuses angeordnet ist, folgende Schritte umfassend:
- Erzeugung eines elektrischen Steuerimpulses
- Übertragen des Steuerimpulses zu einem Impulsgenerator-Schaltkreis (2), um einen Stromimpuls in einem Ultraschall-Erregerkreis (6) des magnetostriktiven Positionssensors auszulösen,
- Erfassen eines durch den Stromimpuls hervorgerufenen Ultraschallimpulses und Umwandeln des Ultraschallimpulses mittels Ultraschallimpulsdetektor-Schaltkreis (3) in ein elektrisches Antwortsignal, und
- Übertragen des Antwortsignals zu einem Auswerte-Schaltkreis (4),
**dadurch gekennzeichnet, daß**
die Übertragung von Nutzsignalen zwischen dem wenigstens einen Schaltkreis (2-4) innerhalb des Gehäuses und dem Rest außerhalb des Gehäuses auf dem Versorgungspotentialleiter (8) einer zweipoligen elektrischen Leitung erfolgt, wobei die Versorgungsspannung mit dem jeweiligen Nutzsignal überlagert ist.

11. Verfahren nach Anspruch 10,
**dadurch gekennzeichnet, daß**
die zweipolige elektrische Leitung eine Koaxialleitung (5) ist.

12. Verfahren nach Anspruch 10 oder 11,
**dadurch gekennzeichnet, daß**
der Steuerimpuls zur Initialisierung der Auswerteschaltung (4) verwendet wird.

13. Verfahren nach einem der Anspruche 10-12,
**dadurch gekennzeichnet, daß**
die Amplitude des Steuerimpulses wenigstens doppelt so groß ist wie die Amplitude des Antwortsignals

## Claims

1. Arrangement for transmitting commutation signals along a magnetostrictive position sensor waveguide, which is arranged inside a housing, with
- a commutation circuit with a pulse generator (2) for exciting the electrical pulses into an ultrasonic exciter circuit (6),
- a commutation circuit with an ultrasonic pulse detector (3) which generates an appropriate reply electrical signal when an ultrasonic pulse is received at the magnetostrictive waveguide, and
- an evaluation circuit (4) for determining the relative position of a displaceable position marking with respect to the waveguide
**characterised in that**
at least a commutation circuit (2-4) inside the housing is wired up to the rest outside the casing by way of a two pole electrical line and **in that** an exciter current pulse or a reply signal may be transmitted along the waveguide.

2. Arrangement according to claim 1,
**characterised in that**
at least the ultrasonic exciter circuit (6) and the pulse generator (2) are decoupled from the reply signals by way of switchers.

3. Arrangement according to claim 1,
**characterised in that**
the switchers are trigger diodes (L1', L2') or Zener diodes.

4. Arrangement according to claim 1,
**characterised in that**
the pulse generator is arranged outside the housing.

5. Arrangement according to claim 1,
with a commutation command circuit (1) for generating a command electrical pulse, where every of the above mentioned commutation circuits (1-4) has at least one supply connection (V1-V4) and an useful signal input, respectively output (N1-N4).

6. Arrangement according to claim 5,
**characterised in that**
the useful signal inputs, respectively outputs (N1-N4) coupled to the supply potential conductors (8) of the two pole electrical line are decoupled by way of the supply potential impedances.

7. Arrangement according to claim 6,
**characterised in that**
the impedances are capacitors (C1, C3, C4, C5)

8. Arrangement according to claim 5
**characterised in that**
the supply connections (V1-V4) are decoupled by way of impedances from the high frequency useful signals and the impedances are especially inductances, respectively LC filters for band-pass width.

9. Arrangement according to claim 5,
**characterised in that**
the ultrasonic pulse detector (3) comprises a pulse amplifier (30).

10. Procedure for transmitting the useful signals of a magnetostrictive position sensor, which is arranged inside a housing, procedure which comprises the following steps.
- the generation of a command electrical pulse
- the transmitting of the command pulse to a commutation circuit with a pulse generator (2) to trigger an electrical pulse into an ultrasonic exciter circuit (6) of the magnetostrictive position sensor.
- the receiving of an ultrasonic pulse generated by the electrical pulse and the turning of this ultrasonic pulse into a reply electrical signal by way of the commutation circuit with a pulse detector (3), and
- the transmitting of the reply signal to an evaluation circuit (4),
**characterised in that**
the transmitting of the useful signals is carried out between that (at least one) commutation circuit (2-4) inside the housing and the rest, outside the casing, onto the supply potential conductor (8) of a two pole electrical line, where the supply voltage is superimposed with the respective useful signal.

11. Procedure according to claim 10,
**characterised in that**
the two pole electrical line is a coaxial conductor (5).

12. Procedure according to claim 10 or 11,
**characterised in that**
the command pulse will be used to initialise the evaluation circuit (4).

13. Procedure according to one of the claims 10-12,
**characterised in that**
the amplitude of the command pulse is at least twice as great as the amplitude of the reply signal.

## Revendications

1. Dispositif pour la transmission des signaux utiles par le conducteur d'un senseur de position magnétostrictif, qui est placé dans l'intérieur d'une carcasse, avec:
- un circuit de connexion-générateur d'impulsion (2) pour l'excitation des impulsions électriques dans un circuit électrique d'excitation à ultrason (6)
- un circuit de connexion - détecteur d'impulsion à ultrason (3) qui à la réception d'une impulsion à ultrason par un guide d'ondes magnétostrictif, produit un signal électrique de réponse, et
- un circuit de connexion pour évaluation (4), pour la détermination de la position relative d'un marquage de position (aimant), déplaçable sur le guide d'ondes.
**caractérisé en ce que**
au moins un circuit de connexion (2-4) de l'intérieur de la carcasse est couplé avec le reste de l'extérieur de la carcasse à l'aide d'une conduite électrique bipolaire et qu'on peut transmettre par la conduite une impulsion d'excitation ou un signal de réponse.

2. Dispositif selon la revendication 1,
**caractérisé en ce que**
au moins le circuit électrique d'excitation (6) et le générateur d'impulsion (2) sont découplés des signales de réponse par interrupteurs.

3. Dispositif selon la revendication 1,
**caractérisé en ce que,**
les interrupteurs sont des diodes de déclenchement (trigger) (L1', L2') ou des diodes Zener.

4. Dispositif selon la revendication 1,
**caractérisé en ce que,**
le générateur d'impulsion est situé à l'extérieur de la carcasse.

5. Dispositif selon la revendication 1, avec un circuit de commande (1) pour la production d'une impulsion électrique de commande, où les circuits de connexion ci-dessus mentionnés (1- 4) ont, chacun de son côté, au moins une connexion d'alimentation (V1-V4) et une entrée respectivement une sortie de signal utile (N1-N4).

6. Dispositif selon la revendication 5,
**caractérisé en ce que,**
les entrées respectivement les sorties de signal utile (N1-N4) qui sont branchées au conducteur du potentiel d'alimentation (8) de la conduite électrique bipolaire sont découplées à l'aide des impédances du potentiel d'alimentation.

7. Dispositif selon la revendication 6,
**caractérisé en ce que,**
les impédances sont des capacités (C1, C3, C4 et C5).

8. Dispositif selon la revendication 5,
**caractérisé en ce que,**
les connexions d'alimentation (V1-V4) sont découplées par impédances des signaux utiles à haute fréquence et les impédances sont spécialement des inductances respectivement des filtres LC passe-bas.

9. Dispositif selon la revendication 5,
**caractérisé en ce que,**
le détecteur d'impulsion à ultrasons (3), comprend un amplificateur d'impulsion (30).

10. Procédé pour le transfert des signaux utiles à un senseur de position magnétostrictif qui se trouve dans l'intérieur d'une carcasse procédé qui comprend les pas suivants:
- la production d'une impulsion électrique de commande,
- la transmission de l'impulsion de commande au circuit de connexion du générateur d'impulsion (2) pour le déclenchement d'un impulsion électrique dans un circuit d'excitation à ultrasons (6) d'un senseur de position magnétostrictif,
- le captage d'une impulsion à ultrason produite de l'impulsion électrique et la transformation de celle-ci à l'aide du circuit de connexion avec détecteur d'impulsion, dans un signal électrique de réponse et
- la transmission du signal de réponse au circuit de connexion d'évaluation (4),
**caractérisé en ce que,**
la transmission des signaux utiles se fait entre au moins un circuit de connexion (2-4) de l'intérieur de la carcasse et le reste, de l'extérieur de la carcasse, par le conducteur du potentiel d'alimentation (8) à une conduite électrique bipolaire, où la tension d'alimentation est superposée avec le signal utile correspondant.

11. Procédé selon la revendication 10,
**caractérisé en ce que,**
la conduite électrique bipolaire est une conduite coaxiale (5).

12. Procédé selon les revendications 10 ou 11,
**caractérisé en ce que,**
l'impulsion de commande sera utilisée pour l'initialisation de la connexion d'évaluation (4).

13. Procédé selon l'une des revendications 10 - 12,
**caractérisé en ce que,**
l'amplitude de l'impulsion de commande est au moins doublement par rapport à l'amplitude du signal de réponse.
